(19) Europäisches Patentamt
European Patent Office
Office européen des brevets

(11) Veröffentlichungsnummer: **0 039 033**
**B1**

(12) **EUROPÄISCHE PATENTSCHRIFT**

(45) Veröffentlichungstag der Patentschrift: **16.02.83**

(51) Int. Cl.³: **C 07 F 9/38**// C02F5/14

(21) Anmeldenummer: **81102991.7**

(22) Anmeldetag: **18.04.81**

(54) **Verfahren zur Herstellung von omega-Amino-1-hydroxyalkyliden-1,1-bisphosphonsäuren.**

(30) Priorität: **28.04.80 DE 3016289**

(43) Veröffentlichungstag der Anmeldung: **04.11.81 Patentblatt 81/44**

(45) Bekanntmachung des Hinweises auf die Patenterteilung: **16.02.83 Patentblatt 83/07**

(84) Benannte Vertragsstaaten: **AT BE CH DE FR GB IT LI LU NL SE**

(56) Entgegenhaltungen:
**EP A 0 001 584**
**DE A 2 534 391**
**DE A 2 702 631**
**BULLETIN OF ACADEMY OF SCIENCES OF THE USSR, Band 27, No. 2, Teil 2, 1978 Englische Übersetzung — New York M.I. KABACHNIK et al. « Synthesis and Acid-Base and Complexing Properties of Amino-Substituted alpha-Hydroxyalkylidenediphosphonic Acids » Seiten 374 bis 377**

(73) Patentinhaber: **Henkel Kommanditgesellschaft auf Aktien**
**Postfach 1100 Henkelstrasse 67**
**D-4000 Düsseldorf 1 (DE)**

(72) Erfinder: **Blum, Helmut**
**Bertha-von-Suttner-Strasse 30**
**D-4000 Düsseldorf 13 (DE)**
Erfinder: **Worms, Karl-Heinz, Dr.**
**An der Jagengrenze 5**
**D-4000 Düsseldorf 13 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 039 033 B1

Verfahren zur Herstellung von omega-Amino-1-hydroxyalkyliden-1,1-bisphosphonsäuren

Die Erfindung betrifft ein verbessertes Verfahren zur Herstellung von µ-Amino-1-hydroxyalkyliden-1,1-bis-phosphonsäuren der nachstehend angegebenen Formel (I), wobei die Endprodukte in besonders reiner Form anfallen.

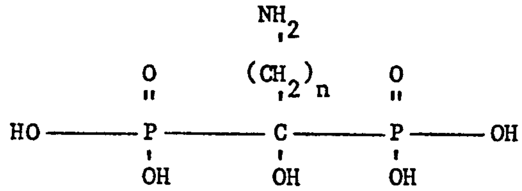

(I)

(n = 3 bis 5)

Es ist bekannt, 3-Amino-1-hydroxypropyliden-1,1-bisphosphonsäure durch Umsetzung von β-Alanin mit phosphoriger Säure und Phosphortrichlorid und anschließender Hydrolyse durch Zugabe von Wasser herzustellen. Wendet man diese Arbeitsweise jedoch auf die Umsetzung von 4-Aminobuttersäure mit $H_3PO_3/PCl_3$ und anschließender Hydrolyse nach Zugabe von Wasser an, so erhält man — wie man durch chromatographische Untersuchungen feststellen kann — ein Phosphonsäuregemisch.

Das Phosphonsäuregemisch bleibt im wesentlichen auch beständig, wenn die Lösung mehrere Stunden gekocht wird. Auch beim Kochen mit 30 %iger Natronlauge erweist sich das Phosphonsäuregemisch als stabil.

Praktisch konnten daher mit der bekannten Arbeitsweise die Phosphonsäuren gemäß Formel (I) nicht ohne großen Aufwand in reiner Form erhalten werden.

Ähnlich verläuft auch die Phosphonylierung von 6-Aminoalkancarbonsäure. Auch hier liegt nach üblicher Hydrolyse ein Reaktionsgemisch vor, welches mehrere verschiedene Phosphonsäuren enthält.

Es wurde nun gefunden, daß man überraschenderweise zu reinen röntgenkristallinen Produkten gelangt, wenn man sich der nachstehend beschriebenen Arbeitsweise bedient.

Gegenstand der Erfindung ist somit die Herstellung von Verbindungen der Formel (I), wobei n eine ganze Zahl von 3 bis 5 bedeutet, durch Umsetzung von Aminoalkancarbonsäuren mit Phosphonylierungsmitteln und anschließender Hydrolyse, welches dadurch gekennzeichnet ist, daß man Aminocarbonsäuren der allgemeinen Formel

$$H_2N—(CH_2)_n—COOH \qquad (II)$$

mit einem Gemisch aus phosphoriger Säure und $PCl_3$ beziehungsweise $PCl_5$ oder phosphoriger Säure und $POCl_3$ umsetzt, das Reaktionsprodukt mit die Aminophosphonsäure nicht oxidierender starker Säure versetzt und durch Erhitzen hydrolysiert.

Als Aminoalkancarbonsäuren kommen 4-Aminobuttersäure, 5-Aminovaleriansäure und 6-Aminocapronsäure in Betracht. Die Umsetzung erfolgt im allgemeinen bei Temperaturen von 80 bis 130 °C, vorzugsweise etwa 100 °C.

Zweckmäßigerweise werden pro Mol Aminocarbonsäure 1 bis 2, vorzugsweise 1,5 Mol $H_3PO_3$ und 1 bis 2, vorzugsweise 1,5 Mol $PCl_3$ beziehungsweise $PCl_5$ oder $POCl_3$ verwendet. Gewünschtenfalls kann auch $PCl_5$ durch ein Gemisch von $PCl_3$ und Chlor ersetzt werden. Führt man das Verfahren auf die zuletzt genannte Weise durch, so ist es vorteilhaft, wenn zunächst eine Mischung aus Aminocarbonsäure, $H_3PO_3$ und $PCl_3$ im Molverhältnis 1 : 1 hergestellt wird und dann eine entsprechende Menge Chlorgas eingeleitet wird.

Gewünschtenfalls können Verdünnungsmittel, insbesondere Chlorkohlenwasserstoffe, wie Chlorbenzol, Tetrachlorethan, Tetrachlorethylen, Trichlorethylen und Dioxan bei der Durchführung der Umsetzung Anwendung finden. Insbesondere bei der Verwendung von phosphoriger Säure und $POCl_3$ als Phosphonylierungsmittel kann auf die Verwendung eines Verdünnungsmittels verzichtet werden. Wird jedoch ein Verdünnungsmittel angewendet, so trennt man dieses nach beendeter Reaktion ab. Das verbleibende Reaktionsprodukt wird dann mit starken Säuren, die gegenüber den Aminophosphonsäuren nicht als Oxidationsmittel wirken, zur Hydrolyse gebracht.

Als starke Säuren können beispielsweise p-Toluolsulfosäure, Bromwasserstoffsäure, Trichloressigsäure oder solche mit vergleichbaren Säurestärken, vorzugsweise konzentrierte Salzsäure Anwendung finden.

Im allgemeinen ist die Hydrolyse nach etwa 3-stündigem Kochen unter Rückfluß vervollständigt, wie die chromatographische Überprüfung der Reaktionslösung zeigt.

Die beschriebene Aminoalkandiphosphonsäure zeichnet sich durch ein hohes Komplexierungsvermögen gegenüber mehrwertigen Metallionen, insbesondere gegenüber Erdalkaliionen sowie Schwermetallionen wie Eisen und Kupfer, aus. Sie können daher speziell auch für Vorgänge der Wasserenthärtung

Anwendung finden. Es ist dabei nicht notwendig, mit stöchiometischen Mengen zu arbeiten, sondern man kann auch durch Anwendung unterstöchiometrischer Mengen Calcitfällungen erheblich verzögern.

Sie sind wegen ihrer Eigenschaften auch geeignet für die Herstellung kosmetischer und pharmazeutischer Präparate.

## Beispiel 1

0,5 Mol 4-Aminobuttersäure und 0,75 Mol phosphorige Säure wurden in 250 ml Chlorbenzol auf 100 °C erhitzt. Unter kräftigem Rühren wurden dann bei dieser Temperatur 0,75 Mol Phosphortrichlorid zugetropft. Nach beendetem Zutropfen wurde 3 Stunden nacherhitzt, wobei ein gelb-orange gefärbtes, festes Reaktionsprodukt gebildet wurde. Von diesem Reaktionsprodukt wurde das Verdünnungsmittel nach Abkühlen abgegossen und der Rückstand in 300 ml konzentrierter Salzsäure aufgekocht. Wie die laufende chromatographische Überprüfung zeigte, enthielt das Reaktionsprodukt neben Monophosphorsäure und phosphoriger Säure noch 3 bis 4 verschiedene Phosphonsäuren. Nach 3-stündigem Kochen unter Rückfluß war die Totalhydrolyse zu einem einheitlichen Produkt papierchromatographisch feststellbar. Durch Versetzen des Hydrolysats mit circa 3 l Aceton wurde die 4-Amino-1-hydroxybutyliden-1,1-bisphosphonsäure in kristalliner Form erhalten. Zwecks Reinigung von anhaftender phosphoriger Säure wurde die substanz in wenig Wasser aufgekocht, abgefrittet und im Vakuumtrockenschrank getrocknet.

Ausbeute : 69,7 g = 56,0 %.

### Analysen

Molmasse laut pH-Titration : 250,4 ; ber. 249
Papierchromatogramm : reine Verbindung
Schmelzpunkt : 229 °C.

Elementaranalyse :

| % | P | C | N | H |
|---|---|---|---|---|
| gef. | 25,1 | 19,7 | 5,92 | 5,21 |
| ber. | 24,90 | 19,28 | 5,62 | 5,22 |

## Beispiel 2

In eine Mischung von 1 Mol phosphoriger Säure und 1 Mol Phosphorylchlorid wurden unter Rühren 0,5 Mol 4-Aminobuttersäure hinzugefügt. Nach 10-minütigem Nachrühren bei Raumtemperatur wurde langsam auf 100 °C erhitzt. Bei 70 bis 80 °C bildete sich ein weißes schaumiges, nicht mehr rührbares Reaktionsprodukt, das noch 3 Stunden auf 100 °C erhitzt wurde. Die weitere Aufarbeitung — Abtrennung des Verdünnungsmittels und Behandlung mit konzentrierter Salzsäure — erfolgte analog zu Beispiel 1.

Ausbeute : 56,1 = 45,1 %.

### Analysen

Molmasse laut pH-Titration : 248,5 ; ber. 249
Papierchromatogramm : reine Verbindung
Schmelzpunkt : 228 °C.

Elementaranalyse :

| % | P | C | N | H |
|---|---|---|---|---|
| gef. | 24,8 | 19,3 | 5,77 | 5,47 |
| ber. | 24,90 | 19,28 | 5,62 | 5,22 |

## Beispiel 3

0,5 Mol 6-Aminocapronsäure wurden mit 0,75 Mol phosphoriger Säure sowie 0,75 Mol Phosphortrichlorid unter den in Beispiel 1 angegebenen Bedingungen umgesetzt und aufgearbeitet. Isoliert wurden 97,4 % 6-Amino-1-hydroxyhexylidenbisphosphonsäure.

### Analysen

Molmasse laut pH-Titration : 275,7 ; ber. 277

Papierchromatogramm : reine Verbindung
Schmelzpunkt : 208 °C.

Elementaranalyse :

| % | P | C | N | H |
|---|---|---|---|---|
| gef. | 22,6 | 26,0 | 5,18 | 6,45 |
| ber. | 22,38 | 25,99 | 5,05 | 6,14 |

Beispiel 4

0,5 Mol. 6-Aminocapronsäure wurden mit 1 Mol phosphoriger Säure und 1 Mol Phosphorylchlorid wie im Beispiel 2 im einzelnen beschrieben umgesetzt und aufgearbeitet.
Ausbeute : 69,0 g = 49,8 % 6-Amino-1-hydroxyhexyliden-1,1-bisphosphonsäure.

Analysen

Molmasse laut pH-Titration : 274,2 ; ber. 277
Papierchromatogramm : reine Verbindung
Schmelzpunkt : 209 °C.

Elementaranalyse :

| % | P | C | N | H |
|---|---|---|---|---|
| gef. | 22,3 | 26,0 | 5,16 | 6,47 |
| ber. | 22,38 | 25,99 | 5,05 | 6,14 |

Beispiel 5

Das Komplexbindevermögen wurde mit dem Hampshire-Test bestimmt, indem eine Calciumsalzlösung zu einer mit dem Sequestriermittel versetzten Sodalösung getropft wurde.

| Phosphonsäure | mg $CaCO_3$/g Säure |
|---|---|
| (1) | 600 |
| (2) | 400 |

Beispiel 6

Die Ergebnisse des Komplexbindevermögens nach dem modifizierten Hampshire-Test, das ist die Auflösung von frisch gefälltem $CaCO_3$, zeigen besonders deutlich die gute Wirksamkeit der Substanzen als Erdalkali-Sequestranten :

| Phosphonsäure | g-Ionen Ca/Mol Säure |
|---|---|
| (1) | 1,5 |
| (2) | 2,0 |

In den Beispielen 5 und 6 bedeutet (1) 4-Amino-1-hydroxybutylidenbisphosphonsäure beziehungsweise (2) bedeutet 6-Amino-1-hydroxyhexylidenbisphosphonsäure.

**Ansprüche**

1. Verfahren zur Herstellung von Verbindungen der allgemeinen Formel

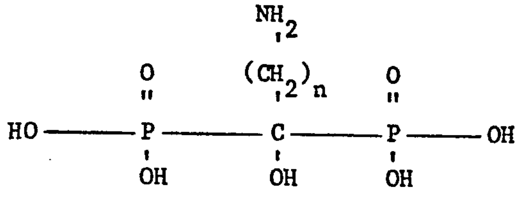

(I)

wobei n eine ganze Zahl von 3 bis 5 bedeutet, durch Umsetzung von Aminocarbonsäuren mit Phosphorylierungsmitteln und anschließender Hydrolyse, dadurch gekennzeichnet, daß man Aminocarbonsäuren der allgemeinen Formel

$$H_2N—(CH_2)_n—COOH \qquad (II)$$

mit einem Gemisch aus phosphoriger Säure und $PCl_3$ beziehungsweise $PCl_5$ oder phosphoriger Säure und $POCl_3$ umsetzt, das Reaktionsprodukt mit die Aminophosphonsäure nicht oxidierender starker Säure versetzt und durch Erhitzen hydrolysiert.

2. Verfahren gemäß Anspruch 1, dadurch gekennzeichnet, daß man die Umsetzung mit phosphoriger Säure und $PCl_3$ oder $PCl_5$ in Gegenwart eines inerten organischen Lösungsmittels durchführt und das Lösungsmittel vor der Hydrolyse abtrennt.

3. Verfahren gemäß Anspruch 1 und 2, dadurch gekennzeichnet, daß die Hydrolyse in Gegenwart konzentrierter Salzsäure erfolgt.

**Claims**

1. A process for the production of compounds corresponding to the following general formula

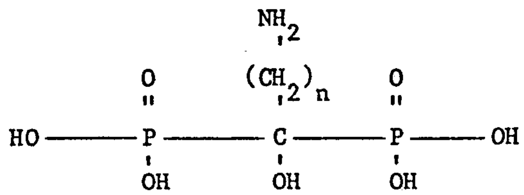

(I)

in which n is an integer of from 3 to 5, by reacting aminocarboxylic acids with phosphorylating agents, followed by hydrolysis, characterised in that aminocarboxylic acids corresponding to the following general formula

$$H_2N—(CH_2)_n—COOH \qquad (II)$$

are reacted with a mixture of phosphorous acid and $PCl_3$ or $PCl_5$ or with a mixture of phosphorous acid and $POCl_3$, a strong acid which does not oxidise the aminophosphonic acid is added to the reaction product which is then hydrolysed by heating.

2. A process as claimed in Claim 1, characterised in that the reaction with phosphorous acid and $PCl_3$ or $PCl_5$ is carried out in the presence of an inert organic solvent and the solvent is separated off before hydrolysis.

3. A process as claimed in Claims 1 and 2, characterised in that the hydrolysis step is carried out in the presence of concentrated hydrochloric acid.

**Revendications**

1. Procédé de préparation de composés de formule générale

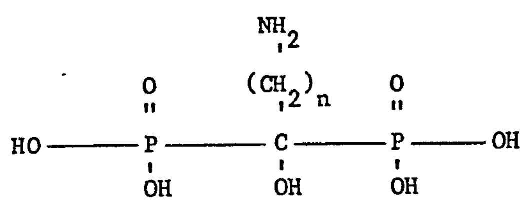

(I)

dans laquelle n est un nombre entier de 3 à 5, par réaction d'acides aminocarboxyliques avec des agents phosphorylants et hydrolyse subséquente, caractérisé en ce que l'on fait réagir des acides aminocarboxyliques de formule générale

$$H_2N—(CH_2)_n—COOH \qquad (II)$$

avec un mélange d'acide phosphoreux et de $PCl_3$ ou de $PCl_5$ ou d'acide phosphoreux et de $POCl_3$, on ajoute au produit de réaction un acide fort non oxydant pour l'acide aminophosphonique et on hydrolyse par chauffage.

2. Procédé selon la revendication 1, caractérisé en ce que l'on effectue la réaction avec l'acide phosphoreux et $PCl_3$ ou $PCl_5$ en présence d'un solvant organique inerte et on sépare le solvant avant l'hydrolyse.

3. Procédé selon les revendications 1 et 2, caractérisé en ce que l'on effectue l'hydrolyse en présence d'acide chlorhydrique concentré.